# EUROPÄISCHE PATENTANMELDUNG

(11) **EP 4 592 056 A1**
(43) Veröffentlichungstag der Anmeldung: **30.07.2025**
(21) Anmeldenummer: 25153156.2
(22) Anmeldetag: 21.01.2025
(51) Int. Cl.: B29C 49/42, B29C 49/06, B29C 49/12, B29C 49/36, B29C 49/78, B29K 67/00, B29L 31/00

(54) **BLASANLAGE SOWIE VERFAHREN ZUM BETREIBEN EINER BLASANLAGE**

(30) Priorität: 23.01.2024 DE 102024101861
(71) Anmelder: KHS GmbH, 44143 Dortmund (DE)
(72) Erfinder: Gerhards, Martin, 44143 Dortmund (DE); Woytal, Cord, 44143 Dortmund (DE); Kiefer, Margit, 44143 Dortmund (DE)
(74) Vertreter: Andrejewski - Honke Patent- und Rechtsanwälte Partnerschaft mbB

(57) **Zusammenfassung**

Gegenstand der Erfindung ist eine Blasanlage zum Blasformen von Behältern (1), insbesondere von Getränkebehältern, mit einem rotierbar eingerichteten Träger (20) sowie einer Vielzahl von an dem Träger (20) angeordneten Blasmodulen (2), welche jeweils eine Behälteraufnahme (3) sowie eine der Behälteraufnahme (3) zugeordnete Fluidzuführung (4) zum Einbringen eines Blasfluids in die Behälter (1) aufweisen, wobei die Fluidzuführungen (4) an eine gemeinsame Zuführleitung (7) anschließen, wobei jeweils eine Ventileinrichtung (9) zum Steuern der Zufuhr des Blasfluids in die Behälter (1) in den Fluidzuführungen (4) angeordnet ist und wobei die Ventileinrichtung (9) zum Schalten über ein Steuerleitungssystem (10) an die Zuführleitung (7) anschließen. Erfindungsgemäß weist das Steuerleitungssystem (10) ein Druckreservoir (16) auf.

## Beschreibung

Die vorliegende Erfindung betrifft eine Blasanlage zum Blasformen, insbesondere zum Streckblasformen, von Behältern mit einem rotierbar eingerichteten Träger sowie einer Vielzahl von an dem Träger angeordneten Blasmodulen, welche jeweils eine Behälteraufnahme sowie eine der Behälteraufnahme zugeordnete Fluidzuführung zum Einbringen eines Blasfluids in die Behälter aufweisen. Bei der Behälteraufnahme handelt es sich insbesondere um eine Blasform, welche eine innenliegende Blaskavität aufweist und wobei die Behälter in Form von Vorformlingen eingebracht und sodann durch Einbringen des Blasfluids plastisch ausgeformt werden. Die Fluidzuführungen schließen an eine gemeinsame Zuführleitung an, wobei jeweils ein Ventileinrichtung zum Steuern der Zufuhr des Blasfluids in die Behälter in den Fluidzuführungen angeordnet ist und wobei die Ventileinrichtungen zum Schalten über ein Steuerleitungssystem an die Zuführleitung anschließen.

Die Erfindung bezieht sich hierbei insbesondere auf Blasanlagen aus dem Bereich der Lebensmitteltechnik, insbesondere der Getränketechnik. Entsprechend handelt es sich bei den Behältern um Getränkebehälter, wobei beispielsweise im Zuge des Blasumformens ein Vorformling, welcher üblicherweise auch als Preform bezeichnet wird, zu einer Getränkeflasche ausgeformt wird. Entsprechend sind die Behälter aus einem thermoplastischen Material, insbesondere Polyethylenterephthalat (PET) gebildet und werden üblicherweise zunächst erwärmt, wodurch das Material aufweicht, sodass anschließend durch Einbringen des Blasfluids eine plastische Verformung in einfacher Art und Weise erfolgen kann. Bei einer Streckblasumformung ist darüber hinaus eine sogenannte Reckstange vorgesehen, welche eine axiale Längung des Behälterkörpers entlang der Behälterachse bewirkt.

Hierbei ist es bekannt, dass das Blasfluid über eine Zuführleitung bereitgestellt wird, welche entsprechend an die einzelnen Fluidzuführungen anschließt. Da das Einbringen des Blasfluids selbstverständlich nicht kontinuierlich sondern in vordefinierten Zeitabschnitten erfolgt, sind darüber hinaus Ventileinrichtungen vorgesehen, welche das Einbringen des Blasfluids steuern. Die Ventileinrichtungen bilden hierbei gemeinsam eine Ventilvorrichtung, welche beispielsweise an eine gemeinsame Steuervorrichtung angeschlossen sein kann. Entsprechend ist es möglich, das Blasfluid lediglich dann in die Behälter einzubringen, wenn diese innerhalb einer geschlossenen Blasform angeordnet sind. In Abschnitten, in denen die Blasform geöffnet und noch kein Behälter eingesetzt wurde, kann dann die Zufuhr des Blasfluids entsprechend gestoppt werden.

Aus der Praxis ist es bekannt, dass die Ventileinrichtungen über ein Steuerleitungssystem mit einem Steuerfluid versorgt werden, sodass entsprechend die Ventileinrichtungen pneumatisch betrieben werden können. Grundsätzlich ist es auch denkbar, eine hydraulische Verstellung vorzusehen. Aufgrund des hierfür benötigten Hydrauliköls ist eine solche Ausgestaltung aber gerade im Bereich der Lebensmitteltechnik von untergeordneter Bedeutung. Entsprechend haben sich insbesondere Ausgestaltungen als besonders wirksam herausgestellt, bei denen das Steuerfluid identisch zum Blasfluid ausgebildet ist, insbesondere handelt es sich in beiden Fällen um Druckluft, wobei üblicherweise das Schalten der Ventileinrichtungen bei einem niedrigeren Druck erfolgt als das Einbringen des Blasfluids in die Behälter.

Um eine solche Ausgestaltung zu ermöglichen, haben sich in der Praxis zwei unterschiedliche Konzepte herausgebildet. So ist es beispielsweise möglich, das Blasfluid und das Steuerfluid separat bereitzustellen, sodass entsprechend beide Fluide über separate Fluidversorgungen bereitgestellt werden. In diesem Fall ist das Steuerleitungssystem unabhängig von der Zuführleitung ausgebildet, sodass auch im Falle eines Ausfalls der Fluidversorgung für das Blasfluid noch immer eine Schaltung der Ventileinrichtungen möglich ist. Eine solche Ausgestaltung wird auch als Zweikreisführung bezeichnet.

Ein alternatives Konzept sieht eine Einkreisführung vor, bei der sowohl das Blasfluid als auch das Steuerfluid über eine gemeinsame Fluidversorgung bereitgestellt werden, sodass entsprechend das Steuerleitungssystem an die gemeinsame Zuführung und an eine gemeinsame Fluidversorgung anschließt.

Eine solche Ausgestaltung hat den Vorteil, dass die Anzahl der erforderlichen Leitungselemente deutlich gegenüber einer Zweikreisführung reduziert werden kann, sodass sich ein einfacherer und kostengünstiger Aufbau ergibt. Hierbei ist insbesondere zu beachten, dass eine Zuführung des Blasfluids und des Steuerfluids über eine Drehdurchführung zu erfolgen hat. Im Falle einer Einkreisführung ist folglich also lediglich eine Drehdurchführung erforderlich, während hingegen bei einer Zweikreisführung zwei separate Drehdurchführungen für das blasfluid und das Steuerfluid vorzusehen ist. Ferner sinkt auch die Anzahl möglicher Fehlerquellen, sodass sich auch ein geringerer Wartungsaufwand ergibt. Allerdings weist eine solche Ausgestaltung auch den Nachteil auf, dass im Falle eines Ausfalls der Fluidversorgung auch ein Schalten der Ventileinrichtungen nicht mehr möglich ist.

Darüber hinaus ergibt sich auch die Problematik, dass eine Sterilisation der Fluidzuführungen und der gemeinsamen Zuführleitung nicht ohne weiteres möglich ist. Hierbei ist zu beachten, dass gerade beim Abfüllen von sensiblen Getränken, sichergestellt werden muss, dass bereits beim Ausformen der Behälter die Keimbelastung möglichst gering gehalten wird. Dies ist insbesondere dadurch sicherzustellen, indem das Leitungssystem, welches die Fluidzuführungen und die gemeinsame Zuführleitung umfasst, keimfrei gehalten wird. Entsprechend muss das Leitungssystem in gewissen Zeitabständen sterilisiert werden, wobei im Falle einer Einkreisführung das Sterilisationsmittel in das Steuerleitungssystem und damit auch in die Ventileinrichtungen gelangen kann. Da das Sterilisationsmittel im Wesentlichen druckfrei zugeführt wird, führt das Eindringen in das Steuerleitungssystem dazu, dass der erforderliche Steuerdruck nicht mehr aufrechterhalten werden kann. Entsprechend ist eine Sterilisation bei einer Einkreisführung bislang nicht ohne weiteres möglich.

Vor diesem Hintergrund liegt der Erfindung die Aufgabe zugrunde, bei einer Einkreisführung ein Schalten der Ventileinrichtungen während einer Sterilisation der Fluidzuführungen und der Zuführleitung zu ermöglichen.

Gegenstand und Lösung dieser Aufgabe ist eine Blasanlage gemäß dem Patentanspruch 1. Darüber hinaus betrifft die Erfindung auch ein Verfahren gemäß Anspruch 11.

Erfindungsgemäß ist vorgesehen, dass das Steuerleitungssystem ein Druckreservoir, insbesondere mit einem Volumen von zumindest 5 I, aufweist. Entsprechend sieht das Steuerleitungssystem ein zusätzliches Druckreservoir vor, in welchem eine gewisse Menge des Blasfluids, insbesondere von Druckluft, gespeichert wird, wobei die Menge so bemessen ist, dass die Ventileinrichtungen der Blasanlage für eine vorgesehene Anzahl von Schaltzyklen gesteuert werden können. Hierbei ist zu beachten, dass mit einem Blasfluid lediglich gemeint ist, dass dieses Fluid über die Blasfluidversorgung bereitgestellt wird, so dass das Fluid, welches zum Schalten der Ventileinrichtungen in seiner Zusammensetzung mit dem Fluid zum plastischen Verformen der Behälter übereinstimmt. Lediglich im Hinblick auf die Druckniveaus können diese Fluide voneinander abweichen, wobei das Druckniveau im Steuerleitungssystem und damit auch im Reservoir niedriger ist als das Druckniveau in der Zuführleitung und in den Fluidzuführungen.

Die Größe des Druckreservoirs richtet sich sowohl nach der Anzahl der Schaltzyklen als auch nach der Anzahl der Blasmodule. Üblicherweise umfasst eine Blasanlage zwischen 4 und 36 Blasmodule. Hierbei ist auch zu beachten, dass die Ventileinrichtungen jeweils über ein oder mehrere Ventilelemente verfügen können, welche jeweils die Zuführung des Blasfluids bei unterschiedlichen Drücken ermöglichen. Aus der Praxis ist es in diesem Zusammenhang bekannt, zumindest zwei oder aber auch drei oder mehr Ventilelemente pro Ventileinrichtung vorzusehen, so dass entsprechend das Blasfluid in zwei oder drei Druckniveaus zugeführt werden kann. Entsprechend ist bei einer Erhöhung der Anzahl der Ventilelemente auch eine größere Menge an Schaltzyklen erforderlich. Gemäß der Erfindung werden bevorzugt insgesamt vier Ventilelemente pro Ventileinrichtung zur Anwendung gebracht.

Mit der Erfindung ist es nunmehr möglich, die Ventileinrichtungen für einen gewissen Zeitraum unabhängig von der Fluidversorgung, welche an die Zuführleitung anschließt, zu betreiben, da die erforderliche Menge an Druckluft in dem Druckluftreservoir gespeichert wird.

Bevorzugt ist zwischen dem Druckreservoir und der Zufuhrleitung kein Druckreduzierventil angeordnet, sodass der maximal im Druckreservoir erreichbare Druck dem Druck in der Zuführleitung entspricht. Insbesondere handelt sich hierbei um einen Druck zwischen 20 und 50 bar, insbesondere zwischen 25 und 40 bar. Ein solch hoher Druck ermöglicht es, dass eine große Menge an Blasfluid innerhalb des Volumens des Druckreservoirs gespeichert werden kann. Da die Ventileinrichtungen üblicherweise mit einem deutlich geringeren Steuerdruck betrieben werden, kann dann zwischen dem Druckreservoir und den Fluidzuführungen zumindest einem Druckreduzierventil angeordnet sein. Dieses Druckreduzierventil ist insbesondere dazu ausgebildet, den Druck auf weniger als 15 bar zu reduzieren.

Eine bevorzugte Weiterbildung der Erfindung sieht vor, dass das Druckreservoir ein Volumen zwischen 5 und 100 I, insbesondere zwischen 10 und 80 I aufweist.

Darüber hinaus kann das Steuerleitungssystem zwischen dem Druckreservoir und der Zuführleitung ein erstes Absperrventil aufweisen. Mit einem Absperrventil ist in diesem Zusammenhang ein Ventil gemeint, welches entweder einen Fluidstrom zwischen der Zuführleitung und dem Druckreservoir in beide Richtungen aktiv durch Verstellen blockieren kann, oder welches zumindest nach Art eines Rückschlagventils eine Rückströmung aus dem Druckreservoir in Richtung der gemeinsamen Zuführleitung verhindert. Hierbei wird sichergestellt, dass während des Betriebs der Blasanlage das Druckreservoir kontinuierlich durch Zufuhr des Blasfluides gefüllt wird, bis der Druck im Druckreservoir im Wesentlichen dem Druck der Zuführleitung entspricht.

Mit einer im Wesentlichen Übereinstimmung ist im Rahmen der Erfindung gemeint, dass der Druck im Druckreservoir zumindest 90 % des Druckes in der Zuführleitung entspricht, so dass beispielsweise Druckverluste innerhalb des Steuerleitungssystems berücksichtigt werden können. Im Falle eines Druckverlustes in der Zuführleitung wird dann über das Absperrventil verhindert, dass das gespeicherte Blasfluid aus dem Druckreservoir zurück in die Zuführleitung strömt. Hierzu wird entweder das Absperrventil aktiv geschlossen oder aber eine entsprechende Rückströmung durch die Ausbildung als Rückschlagventil verhindert.

Bevorzugt ist in der Zuführleitung und/oder in dem Druckreservoir eine Druckmesseinrichtung angeordnet. Entsprechend können die Drücke an beiden Stellen überwacht werden. Beispielsweise ist es möglich, dass die Druckmesseinrichtung bzw. die Druckmesseinrichtungen mit einer Steuervorrichtung verbunden sind, wobei im Falle eines ausreichend hohen Druckes in dem Druckreservoir das erste Absperrventil aktiv geschlossen wird. Hierdurch wird gewährleistet, dass im Falle eines Druckverlustes in der Zuführleitung keine weitere Handlung bezüglich des Druckreservoirs notwendig ist. Alternativ kann die Steuervorrichtung auch dazu eingerichtet sein, dass bei Messung eines Druckabfalls durch die Druckmesseinrichtung in der Zuführleitung das Absperrventil aktiv geschlossen wird.

Eine Weiterbildung der Erfindung sieht ferner vor, dass das Steuerleitungssystem eine Hauptsteuerleitung und eine Nebensteuerleitung aufweist, wobei das Druckreservoir in der Nebensteuerleitung angeordnet ist und wobei die Hauptsteuerleitung die Ventileinrichtungen unter Umgehung des Druckreservoirs mit der Zuführleitung verbindet. Entsprechend kann über die Hauptsteuerleitung und die Nebensteuerleitung unterschieden werden zwischen einem Produktionsbetrieb, in welchem das Druckreservoir nicht benötigt wird, und einem Störungsbetrieb oder Sterilisationsbetrieb. Entsprechend könnte im Fall eines Ausfalls der Fluidversorgung noch immer eine Schaltung der Ventileinrichtungen über die Nebensteuerleitung ermöglicht werden. Darüber hinaus kann auch in einem Sterilisationsbetrieb auf die Nebensteuerleitung geschaltet werden, um während der Sterilisation der Fluidzuführungen eine Schaltung der Ventileinrichtungen zu ermöglichen.

Bevorzugt ist darüber hinaus vorgesehen, dass ein zweites Absperrventil in der Hauptsteuerleitung angeordnet ist, oder ein Wechselventil die Hauptsteuerleitung und die Nebensteuerleitung mit den Ventileinrichtungen wahlweise verbindet. Über das zweite Absperrventil oder das Wechselventil kann dann entsprechend die Hauptsteuerleitung gesperrt werden, sodass eine Versorgung der Ventileinrichtungen ausschließlich über die Nebensteuerleitung und damit über das Druckreservoir bewirkt wird. In einem Produktionsbetrieb kann dann wieder auf die Hauptsteuerleitung geschaltet werden. Bevorzugt ist die Nebensteuerleitung vollständig von den Ventileinrichtungen getrennt, sodass ein Abfluss des gespeicherten Blasfluids verhindert wird. Anstelle eines Wechselventils kann aber selbstverständlich auch über zwei separate Ventile die Hauptsteuerleitung oder die Nebensteuerleitung verbunden oder gesperrt werden.

Hinsichtlich der Ausgestaltung des Druckreservoirs sind grundsätzlich keine besonderen Vorgaben einzuhalten. Besonders effektiv hat sich in diesem Zusammenhang jedoch die Ausbildung als Drucktank oder als Ringleitung herausgestellt, wobei die Ringleitung dazu ausgebildet ist, den Träger zumindest abschnittsweise zu umschließen. Eine Ringleitung weist in diesem Zusammenhang den Vorteil auf, dass diese gleichmäßig um den Träger herum angeordnet werden kann, während ein Drucktank lediglich an einer Stelle des Trägers angeordnet wird. Dies ist gerade vor dem Hintergrund besonders hervorzuheben, wonach das Druckreservoir gegenüber dem Träger feststehend ausgebildet sein kann. Gemäß einer solchen Ausgestaltung ist das Druckreservoir bevorzugt an, insbesondere auf, dem Träger angeordnet, sodass die Ausgestaltung und Anordnung des Druckreservoirs auch wesentlich für die Masseverteilung des Trägers sowie den darauf angeordneten Komponenten ist. In diesem Zusammenhang ist eine Ringleitung aufgrund der Umfangsverteilung bevorzugt. Bei der Ausgestaltung des Druckreservoirs in Form eines Drucktanks kann insbesondere vorgesehen sein mehrere Drucktanks auf dem Träger anzuordnen, um eine gleichmäßige Masseverteilung zu ermöglichen.

Eine besonders bevorzugte Ausgestaltung der Erfindung sieht ferner vor, dass die Fluidzuführungen über eine Drehdurchführung mit der Zuführleitung in Fluidverbindung stehen und wobei das Steuerleitungssystem feststehend gegenüber dem Träger angeordnet ist. Hierzu schließen die Fluidzuführungen entweder unmittelbar oder mittelbar an die Drehdurchführung an, welche die Übertragung des Blasfluids zwischen einem feststehenden Leitungssystem und den rotierenden Fluidzuführungen ermöglicht. Das Steuerleitungssystem und damit die Hauptsteuerleitung und die Nebensteuerleitung sind bevorzugt auf dem Träger angeordnet und rotieren dementsprechend mit. Entsprechend ist das Steuerleitungssystem zwischen der Drehdurchführung und den Fluidzuführungen angeordnet.

Eine bevorzugte Weiterbildung der Erfindung sieht ferner vor, dass die Zuführleitung an einem den Fluidzuführungen gegenüberliegenden Ende ein Sterilisationsfluidanschluss zum Anschließen einer Sterilisationsvorrichtung aufweist. Entsprechend kann über diesen Sterilisationsfluidanschluss ein Sterilisationsfluid zugeführt werden, welches die Zuführleitung und infolgedessen auch die Fluidzuführungen durchströmt und sterilisiert. Bevorzugt ist an dem Sterilisationsfluidanschluss ein Sterilisationsfluidabsperrventil vorgesehen, welches lediglich dann geöffnet wird, wenn eine Sterilisationsvorrichtung angeschlossen ist und in den Sterilisationsbetrieb übergegangen wird.

Bevorzugt ist eine Filtervorrichtung in der Zuführleitung, insbesondere stromabwärts des Sterilisationsfluidanschlusses, angeordnet. Diese Filtervorrichtung kann ein oder mehrere Filterelemente aufweisen, welche dazu dienen, das Blasfluid von Keimen und Partikeln zu reinigen. Die Filterelemente können entsprechend als Partikelfilter oder als Aktiv-Kohle-Filter ausgebildet sein. Neben den Fluidzuführungen und der Zuführleitung ist es daher auch erforderlich, die Filterelemente zu rekonditionieren bzw. zu sterilisieren. Dies kann beispielsweise dadurch erfolgen, dass das Sterilisationsfluid durch die Filtervorrichtung und damit durch die Filterelemente strömt.

Um eine plastische Verformung der Behälter überhaupt erst in geeigneter Art und Weise zu ermöglichen, kann die Blasanlage eine Heizvorrichtung aufweisen, welche dem zumindest einen Blasmodul vorgeschaltet ist und in welcher die Behälter bzw. die Vorformlinge aufgeheizt werden, um das Material, insbesondere PET, aufzuweichen.

Die Erfindung ist darüber hinaus gerade dann von Vorteil, wenn nicht nur das Einbringen eines sterilen Blasfluids gewünscht wird, sondern wenn auch die Behälter bereits während der Blasumformung steril vorliegen oder im Zuge der Blasumformung sterilisiert werden. Insbesondere kann die Blasanlage eine Behältersterilisationsvorrichtung aufweisen, in welcher die Behälter sterilisiert werden.

Bevorzugt ist diese Behältersterilisationsvorrichtung in Transportrichtung der Behälter vor dem zumindest einen Blasmodul angeordnet. Hierbei kann die Behältersterilisationsvorrichtung entweder vor der Heizvorrichtung oder zwischen der Heizvorrichtung und dem zumindest einen Blasmodul angeordnet sein. Eine Anordnung vor der Heizvorrichtung weist hierbei den Vorteil auf, dass im Falle des Sterilisierens mit Hilfe eines Behältersterilisationsfluids erst in der Behältersterilisationsvorrichtung das Behältersterilisationsfluid eingebracht und dieses Behältersterilisationsfluid sodann in der nachgeschalteten Heizvorrichtung aktiviert wird. Bei dem Sterilisationsmittel handelt es sich insbesondere um Wasserstoffperoxid (H₂O₂), Peressigsäure, Wasserdampf oder Mischungen hieraus. Darüber hinaus ist es auch denkbar, dass die Behältersterilisationsvorrichtung in die Heizvorrichtung oder in die Blasmodule integriert ist, so dass eine Sterilisation entsprechend während der Erwärmung oder während der Blasumformung erfolgt. Anstelle einer Sterilisation mit einem Behältersterilisationsfluid kommt ferner auch eine Sterilisation der Behälter durch Bestrahlung, insbesondere durch UV-Bestrahlung oder Elektronenstrahlsterilisation, in Betracht.

Gegenstand der Erfindung ist ferner ein Verfahren zum Betreiben einer Blasanlage gemäß Patentanspruch 11, wobei während eines Produktionsbetriebes ein Blasfluid der Zuführleitung zugeführt wird, welches zum Beaufschlagen der Behälter und zum Schalten der Ventileinrichtungen verwendet wird und wobei ein Teil des Blasfluids zwischengespeichert wird und wobei in einem Sterilisationsbetrieb ein Sterilisationsfluid der Zuführleitung zugeführt wird, während die Ventileinrichtungen durch das gespeicherte Blasfluid geschaltet werden. Die Speicherung des Blasfluids erfolgt in dem zuvor beschriebenen Druckreservoir, wobei das in dem Druckreservoir angeordnete Blasfluid als gespeichertes Blasfluid bezeichnet wird. Bei dem Sterilisationsfluid handelt es sich insbesondere um Wasserstoffperoxid (H₂O₂), Peressigsäure, Wasserdampf oder Mischungen hieraus.

Bevorzugt sind während des Sterilisationsbetriebs die Ventileinrichtungen von der Zuführleitung fluiddicht getrennt. Dies kann über ein erstes Absperrventil erfolgen. Hierdurch wird sichergestellt, dass lediglich das gespeicherte Blasfluid zum Schalten in die Ventileinrichtungen gelangt.

Eine bevorzugte Weiterbildung der Erfindung sieht ferner vor, dass das gespeicherte Blasfluid zwischen 200 und 2000 Schaltzyklen ermöglicht. Darüber hinaus handelt es sich bei dem Blasfluid vorzugsweise um Druckluft oder um ein flüssiges Blasfluid, z.B. ein Getränk.

Ferner weist das Blasfluid in der Zuführleitung einen Druck zwischen 20 und 50 bar, insbesondere zwischen 25 und 40 bar auf, wobei das gespeicherte Blasfluid unmittelbar zu Beginn des Sterilisationsbetriebs einen Druck aufweist, welcher zumindest 90 % des Drucks in der Zuführleitung entspricht. Hierdurch wird sichergestellt, dass bereits eine ausreichende Menge des Blasfluids in dem Druckreservoir gespeichert ist. Darüber hinaus können auch etwaige Leitungsverluste berücksichtigt werden.

Bevorzugt wird den Ventileinrichtungen im Sterilisationsbetrieb und im Produktionsbetrieb Blasfluid zum Schalten mit einem Druck zwischen 5 und 20 bar, insbesondere zwischen 8 und 12 bar zugeführt.

Bei der Blasanlage handelt es sich bevorzugt um eine Blasanlage, bei der im Produktionsbetrieb Behälter in Form von Vorformlingen zugeführt und durch Beaufschlagen mit dem Blasfluid zu Getränkeflaschen umgeformt werden und wobei das Einbringen des Blasfluids über die Ventileinrichtungen gesteuert wird. Darüber hinaus kann zusätzlich auch ein Recken der Vorformlinge erfolgen. Hierzu wird vor dem eigentlichen Blasumformen eine Reckstange entlang der Behälterachse eingeführt, um eine axiale Längung zu ermöglichen. Ein solches Verfahren wird auch als Streckblasformen bezeichnet.

Im Folgenden wird die Erfindung anhand von Zeichnungen näher erläutert. Es zeigen:
- Fig. 1: eine schematische Darstellung der erfindungsgemäßen Blasanlage während des Produktionsbetriebes
- Fig. 2: eine schematische Darstellung der erfindungsgemäßen Blasanlage während eines Sterilisationsbetriebes
- Fig. 3, 4: alternative Ausgestaltungen der erfindungsgemäßen Blasanlage in einer seitlichen Ansicht.

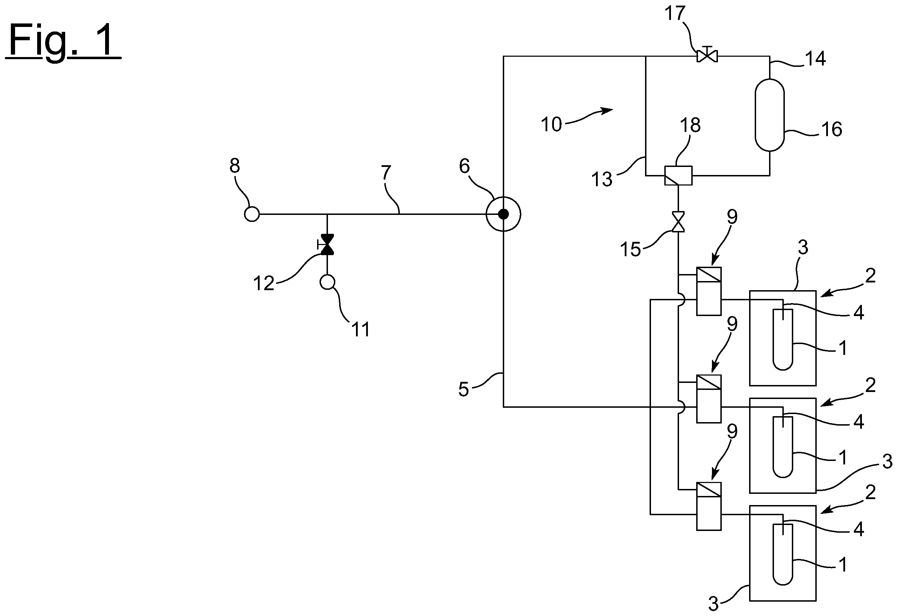

Die Fig. 1 zeigt eine Blasanlage zum Blasformen von Behältern 1, welche in dem gezeigten Beispiel als Kunststoffvorformlinge bzw. Preforms ausgebildet sind, und welche innerhalb der Blasanlage zu Getränkeflaschen ausgebildet werden. Hierzu ist eine Vielzahl von Blasmodulen 2 vorgesehen, welche jeweils eine Behälteraufnahme 3 sowie eine der Behälter 3 zugeordnete Fluidzuführung 4 aufweisen. Bei der Behälteraufnahme 3 handelt es sich insbesondere um eine Blasform, welche eine innenliegende Blaskavität aufweist, an welche die Behälter 1 durch Beaufschlagung mit einem Blasfluid angepresst werden. Die Beaufschlagung mit dem Blasfluid erfolgt über die Fluidzuführungen 4, wobei die Fluidzuführungen 4 über eine Blasleitung 5 und eine Drehdurchführung 6 an eine gemeinsame Zuführleitung 7 anschließen. Diese Zuführleitung 7 ist wiederum mit einer Fluidversorgung 8 verbunden, über welches das Blasfluid in Form von Druckluft bereitgestellt werden kann. Hierbei weist das Blasfluid innerhalb der Zuführleitung 7 üblicherweise einen Druck zwischen 20 und 45, z. B. 40 bar, auf.

Um die Zufuhr des Blasfluids steuern zu können, sind ferner Ventileinrichtungen 9 vorgesehen, welche die Zufuhr des Blasfluids durch die Fluidzuführungen 4 steuern. So soll beispielsweise in einem geöffneten Zustand der Blasformen, in dem kein Behälter 1 vorliegt, kein Blasfluid durch die Fluidzuführungen 4 austreten. Hierbei ist zu beachten, dass jede Ventileinrichtung 9 grundsätzlich über ein oder mehrere Ventilelemente verfügen kann, welche die Zuführung des Blasfluids in die Behälter 1 in unterschiedlichen Druckniveaus ermöglicht.

Zur Steuerung der Ventileinrichtungen 9 wird ebenfalls Druckluft verwendet, welche über die Fluidversorgung 8 bereitgestellt wird. Entsprechend ist ein Steuerleitungssystem 10 vorgesehen, welches über die Drehdurchführung 6 Blasfluid entnimmt, sodass sowohl den Fluidzuführungen 4 als auch den Ventileinrichtungen 9 zum Schalten dasselbe Blasfluid zur Verfügung gestellt wird.

Ein solches System wird allgemein hin auch als Einkreisführung bezeichnet, da sowohl die Ventileinrichtungen 9 als auch die Fluidzuführungen 4 an dieselbe Fluidversorgung 8 anschließen. Hierbei ist es allerdings problematisch, dass im Falle einer Sterilisation der Fluidzuführungen 4 sowie der Zuführleitung 7 ein Sterilisationsmittel in die Ventileinrichtungen 9 gelangen kann. Die Zufuhr dieses Sterilisationsmittel beinhaltenden Sterilisationsfluids erfolgt über einen Sterilisationsfluidanschluss 11, wobei im Falle der Fig. 1 keine Verbindung zu einer Sterilisationsvorrichtung 19 vorliegt. Entsprechend ist ein Sterilisationsfluidabsperrventil 12 in der Fig. 1 in einem geschlossenen Zustand dargestellt.

Während des in der Fig. 1 dargestellten Produktionsbetriebes erfolgt ferner die Zufuhr des Blasfluids zum Schalten der Ventileinrichtungen 9 über eine Hauptsteuerleitung 13, welche die Ventileinrichtungen 9 im Wesentlichen unmittelbar mit der Drehdurchführung 6 verbindet. Hierbei ist lediglich ein Druckreduzierventil 15 vorgesehen, welches den Druck aus der Zuführleitung 7 auf einen erforderlichen Schaltdruck reduziert. Dieser Schaltdruck beträgt üblicherweise zwischen 5 und 20 bar.

Bereits nach der Fig. 1 wird ferner deutlich, dass neben der Hauptsteuerleitung 13 auch eine Nebensteuerleitung 14 vorgesehen ist, wobei ein Druckreservoir 16 in der Nebensteuerleitung 14 angeordnet ist und wobei über ein in der Fig. 1 geöffnetes erstes Absperrventil 17 Blasfluid mit einem Druck zugeführt werden kann, welcher im Wesentlichen dem Druck des Blasfluids innerhalb der Zuführleitung 7 entspricht.

Gemäß der Fig. 1 wird dieses Druckreservoir 16 kontinuierlich gefüllt, da ein Wechselventil 18 die Nebensteuerleitung 14 von den Ventileinrichtungen 9 fluiddicht trennt und zum Schalten lediglich über die Hauptsteuerleitung 13 Blasfluid bzw. Druckluft zugeführt wird.

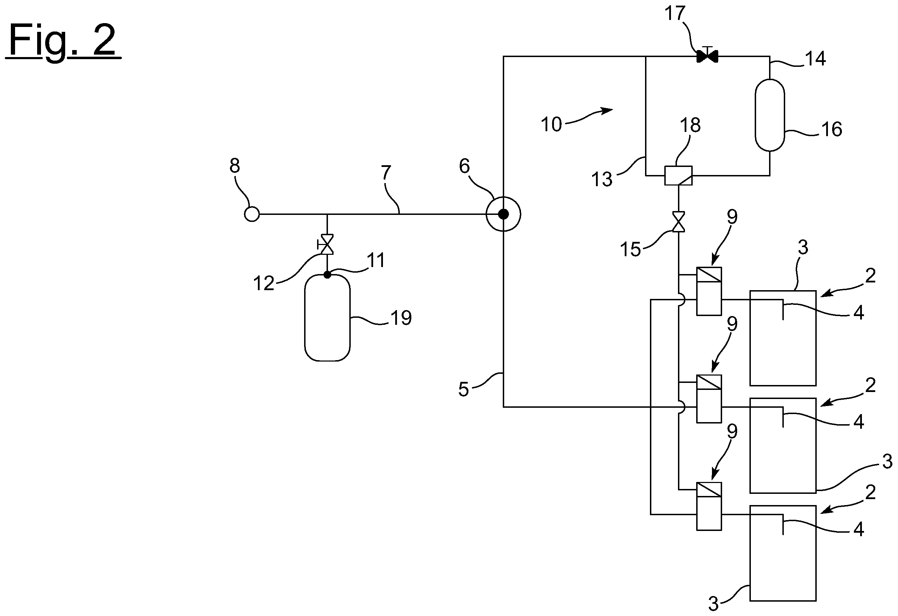

Die Fig. 2 zeigt die erfindungsgemäße Blasanlage in einem Sterilisationsbetrieb. Der Sterilisationsfluidanschluss 11 ist nunmehr mit einer Sterilisationsvorrichtung 19 verbunden und das Sterilisationsfluidventil 12 geöffnet, sodass das Sterilisationsfluid in die Zuführleitung 7 und damit auch in die Fluidzuführungen 4 gelangen kann. Während des Sterilisationsbetriebes sind üblicherweise keine Behälter 1 innerhalb der Behälteraufnahme 3 angeordnet.

Während des Sterilisationsbetriebes ist es wichtig, dass die Ventileinrichtungen 9 nicht mit dem Sterilisationsfluid beaufschlagt werden. Entsprechend ist das erste Absperrventil 17 geschlossen und das Wechselventil 18 auf die Nebensteuerleitung 14 geschaltet. Hierüber ist es nunmehr möglich, dass die Ventileinrichtungen 9 zum Schalten ausschließlich über das gespeicherte Blasfluid im Druckreservoir 16 gespeist werden, wobei das Druckreservoir 16 ein Volumen von zumindest 5 I aufweist, sodass eine Menge an Blasfluid zur Verfügung steht, um eine ausreichende Anzahl von Schaltzyklen während des Sterilisationsbetriebes zu ermöglichen.

Anhand der Darstellung in den Fig. 1 und 2 wird ferner deutlich, dass das Druckreservoir 16 und auch das Steuerleitungssystem 10 stromabwärts der Drehdurchführung 6 angeordnet sind, sodass es sich folglich um rotierende Komponenten handelt, welche auf einem Träger 20 angeordnet sind.

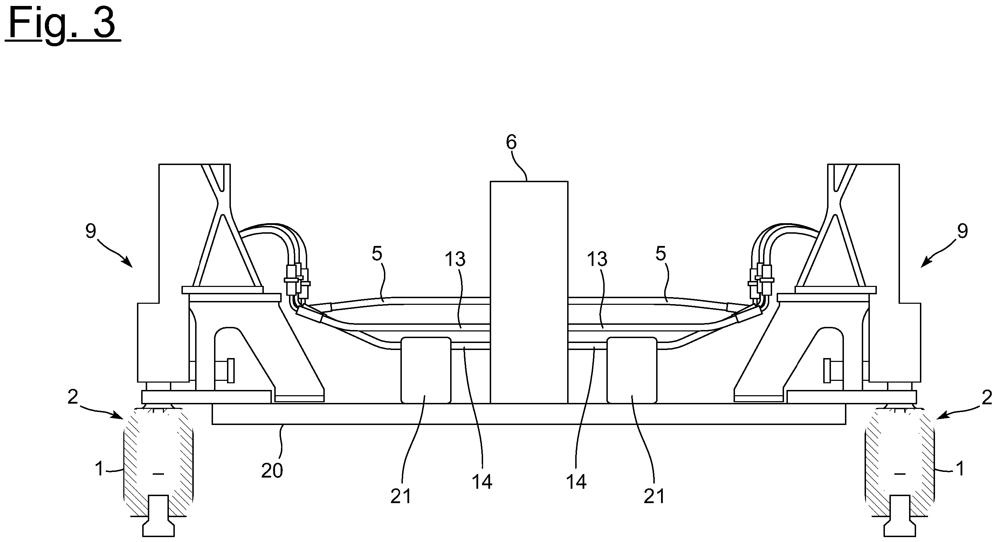

Eine entsprechende Ausgestaltung ist in der Fig. 3 gezeigt. Hierbei sind in einer Schnittdarstellung sowohl der Träger 20 als auch die Blasmodule 2 dargestellt, welche an dem Träger 20 befestigt sind. Oberhalb der Blasmodule 2 sind die Ventileinrichtungen 9 angeordnet, über welche das Blasfluid in die Behälter 1 eingeleitet wird.

Über die Drehdurchführung 6 werden sowohl die Fluidzuführungen 4 über die Verbindungleitung 5 mit einem Blasfluid versorgt. Darüber hinaus sind die Ventileinrichtungen 9 über die Hauptsteuerleitung 13 und die Nebensteuerleitung 14 mit der Drehdurchführung 6 und damit mit der in der Fig. 3 nicht dargestellten Zuführleitung 7 verbunden. Auf dem Träger 20 sind ferner zwei Drucktanks 21 dargestellt, welche gemeinsam das Druckreservoir 16 bilden.

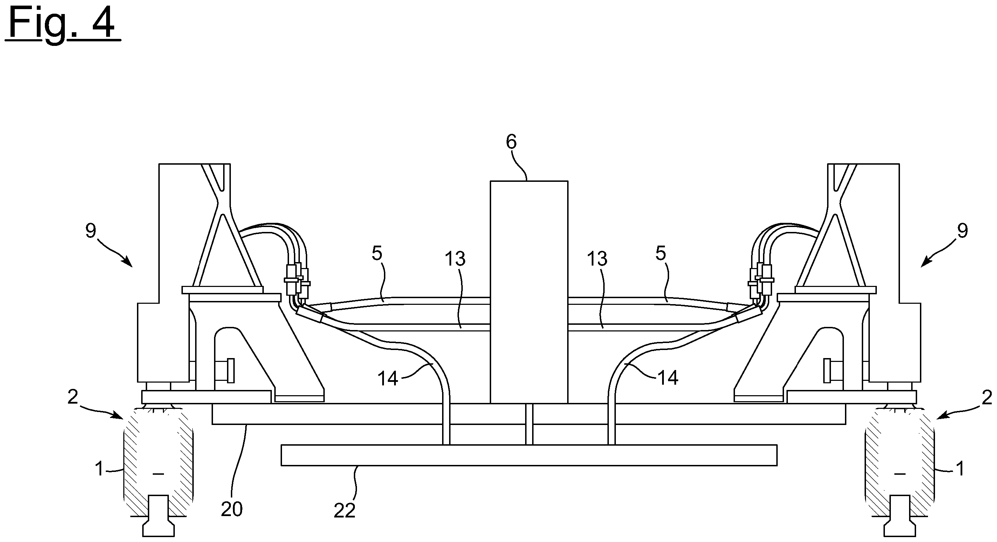

Die Fig. 4 zeigt in diesem Zusammenhang eine alternative Ausgestaltung, bei der das Druckreservoir 16 in Form einer Ringleitung 22 dargestellt ist.

### Bezugszeichenliste:

- 1: Behälter
- 2: Blasmodule
- 3: Behälteraufnahme
- 4: Fluidzuführung
- 5: Blasleitung
- 6: Drehdurchführung
- 7: Zuführleitung
- 8: Fluidversorgung
- 9: Ventileinrichtungen
- 10: Steuerleitungssystem
- 11: Sterilisationsfluidanschluss
- 12: Sterilisationsfluidabsperrventil
- 13: Hauptsteuerleitung
- 14: Nebensteuerleitung
- 15: Druckreduzierventil
- 16: Druckreservoir
- 17: Absperrventil
- 18: Wechselventil
- 19: Sterilisationsvorrichtung
- 20: Träger
- 21: Drucktanks
- 22: Ringleitung

## Patentansprüche

1. Blasanlage zum Blasformen von Behältern (1), insbesondere von Getränkebehältern, mit einem rotierbar eingerichteten Träger (20) sowie einer Vielzahl von an dem Träger (20) angeordneten Blasmodulen (2), welche jeweils eine Behälteraufnahme (3) sowie eine der Behälteraufnahme (3) zugeordnete Fluidzuführung (4) zum Einbringen eines Blasfluids in die Behälter (1) aufweisen, wobei die Fluidzuführungen (4) jeweils über eine Ventileinrichtung (9) zum Steuern der Zufuhr des Blasfluids in die Behälter (1) an eine gemeinsame Zuführleitung (7) anschließen und wobei die Ventileinrichtungen (9) zum Schalten über ein Steuerleitungssystem (10) an die Zuführleitung (7) anschließen,
**dadurch gekennzeichnet, dass**
das Steuerleitungssystem (10) ein Druckreservoir (16) aufweist.

2. Blasanlage nach Anspruch 1, **dadurch gekennzeichnet, dass** das Druckreservoir (16) ein Volumen zwischen 5 und 100 I, insbesondere zwischen 10 und 80 I aufweist.

3. Blasanlage nach einem der vorangegangenen Ansprüche, **dadurch gekennzeichnet, dass** Steuerleitungssystem (10) zwischen dem Druckreservoir (16) und der Zuführleitung (7) ein erstes Absperrventil (17) aufweist.

4. Blasanlage nach einem der vorangegangenen Ansprüche, **dadurch gekennzeichnet, dass** das Steuerleitungssystem (10) eine Hauptsteuerleitung (13) und eine Nebensteuerleitung (14) aufweist, wobei das Druckreservoir (16) in der Nebensteuerleitung (14) angeordnet ist und wobei die Hauptsteuerleitung (13) die Ventileinrichtungen (9) unter Umgehung des Druckreservoirs (16) mit der Zuführleitung (7) verbindet.

5. Blasanlage nach Anspruch 4, **dadurch gekennzeichnet, dass** ein zweites Absperrventil (17) in der Hauptsteuerleitung (13) angeordnet ist oder ein Wechselventil (18) die Hauptsteuerleitung (13) und die Nebensteuerleitung (14) mit den Ventileinrichtungen (9) wahlweise verbindet.

6. Blasanlage nach einem der vorangegangenen Ansprüche, **dadurch gekennzeichnet, dass** das Druckreservoir (16) als Drucktank (21) oder als Ringleitung (22) ausgebildet ist, welche den Träger (20) zumindest abschnittsweise umschließt.

7. Blasanlage nach einem der vorangegangenen Ansprüche, **dadurch gekennzeichnet, dass** das Druckreservoir (16) gegenüber dem Träger (20) feststehend ausgebildet ist.

8. Blasanlage nach einem der vorangegangenen Ansprüche, **dadurch gekennzeichnet, dass** die Fluidzuführungen (4) über eine Drehdurchführung (6) mit der Zuführleitung (7) in Fluidverbindung stehen und wobei das Steuerleitungssystem (10) feststehend gegenüber dem Träger (20) angeordnet ist.

9. Blasanlage nach einem der vorangegangenen Ansprüche, **dadurch gekennzeichnet, dass** die Zuführleitung (7) an einem den Fluidzuführungen (4) gegenüberliegenden Ende einen Sterilisationsfluidanschluss (11) zum Anschließen einer Sterilisationsvorrichtung (19) aufweist.

10. Blasanlage nach einem der vorangegangenen Ansprüche, **dadurch gekennzeichnet, dass** eine Filtervorrichtung in der Zuführleitung (7), insbesondere stromabwärts des Sterilisationsfluidanschlusses (11), angeordnet ist.

11. Verfahren zum Betreiben einer Blasanlage nach einem der vorangegangenen Ansprüche, wobei während eines Produktionsbetriebes ein Blasfluid der Zuführleitung (7) zugeführt wird, welches zum Beaufschlagen der Behälter (1) und zum Schalten der Ventileinrichtungen (9) verwendet wird und wobei ein Teil des Blasfluides zwischengespeichert wird und wobei in einem Sterilisationsbetrieb ein Sterilisationsfluid der Zuführleitung (7) zugeführt wird, während die Ventileinrichtungen (9) durch das gespeicherte Blasfluid geschaltet werden.

12. Verfahren nach Anspruch 11, wobei während des Sterilisationsbetriebs die Ventileinrichtungen (9) von der Zuführleitung (7) fluiddicht getrennt sind.

13. Verfahren nach Anspruch 11 oder 12, wobei das gespeicherte Blasfluid zwischen 200 bis 2000 Schaltzyklen ermöglicht.

14. Verfahren nach einem der Ansprüche 11 bis 13, wobei das Blasfluid Druckluft ist.

15. Verfahren nach einem der Ansprüche 11 bis 14, wobei das Blasfluid in der Zuführleitung (7) einen Druck zwischen 25 und 40 bar aufweist und wobei das gespeicherte Blasfluid unmittelbar zu Beginn des Sterilisationsbetriebs einen Druck aufweist, welcher zumindest 90 % des Drucks in der Zuführleitung (7) entspricht.

16. Verfahren nach einem der Ansprüche 11 bis 15, wobei den Ventileinrichtungen (9) im Sterilisationsbetrieb und im Produktionsbetrieb Blasfluid zum Schalten mit einem Druck zwischen 5 und 20 bar zugeführt wird.

17. Verfahren nach einem der Ansprüche 11 bis 16, wobei in dem Produktionsbetrieb der Behälterbehandlungsanlage Behälter (1) in Form von Vorformlingen zugeführt und durch Beaufschlagen mit dem Blasfluid zu Getränkeflaschen umgeformt werden und wobei das Einbringen des Blasfluides über die Ventileinrichtungen (9) gesteuert wird.
